# FASCICULE DE BREVET EUROPEEN

(11) **EP 0 724 089 B1**
(45) Date de publication et mention de la délivrance du brevet: **26.04.2000**
(21) Numéro de dépôt: 96400151.5
(22) Date de dépôt: 22.01.1996
(51) Int. Cl.: F16F 9/096, F16F 9/32, B60G 21/06

(54) **Dispositif formant vérin hydraulique pouvant être utilisé dans une suspension hydropneumatique pour véhicule automobile**
Hydraulisches Stellglied zum Gebrauch in einer hydropneumatischen Aufhängung für ein Kraftfahrzeug
Hydraulic actuator suitable for use in a hydropneumatic suspension for a motor vehicle

(30) Priorité: 25.01.1995 FR 9500843
(43) Date de publication de la demande: 31.07.1996
(73) Titulaire: AUTOMOBILES PEUGEOT, 75116 Paris (FR); AUTOMOBILES CITROEN, 92200 Neuilly-sur-Seine (FR)
(72) Inventeur: Le Gourvellec, François, F-78120 Rambouillet (FR); Ney, Yves, F-57700 Hayange (FR)
(74) Mandataire: Thinat, Michel

(56) Documents cités:
- EP-A- 0 328 840
- DE-A- 1 430 900
- DE-B- 1 260 998
- FR-A- 2 080 095
- FR-A- 2 401 037
- FR-A- 2 654 992
- US-A- 2 984 501
- AUTOMOTIVE ENGINEER, vol. 7, no. 4, GB, pages 15-16, XP002003319 "Interconnected suspension systems"

## Description

La présente invention concerne un dispositif formant vérin hydraulique pouvant être utilisé par exemple dans une suspension hydropneumatique pour véhicule automobile.

On connaît l'utilisation, dans les suspensions hydropneumatiques, de vérins comprenant chacun trois chambres dont l'une sert à l'anti-pompage et les deux autres à l'anti-dévers du véhicule en étant croisées avec les deux chambres anti-dévers d'un autre vérin du même essieu.

Un vérin de ce type est décrit par exemple dans le document EP-A-0 201 425.

Cependant, la mise en oeuvre pratique du vérin décrit dans ce document antérieur ci-dessus n'est pas aisée et pose en tout cas des problèmes délicats en matière d'alignement et d'étanchéité des chambres constituant ce vérin connu.

L'invention propose une réalisation pratique d'un vérin à trois chambres d'une forme compacte et résolvant au mieux ces problèmes.

A cet effet, le dispositif formant vérin hydraulique de l'invention, pouvant être utilisé par exemple dans une suspension hydropneumatique pour véhicule automobile, comprend un cylindre dans lequel est montée à coulissement une structure à pistons agencée pour définir dans le cylindre trois chambres indépendantes, deux des trois chambres étant annulaires et entourant une pièce cylindrique coulissante portant d'une part un premier piston et d'autre part un deuxième piston délimitant la troisième chambre sensiblement cylindrique. Un tel dispositif est connu de EP-A-0 201 425.

Selon l'invention, la pièce cylindrique coulissante comprend deux parties tubulaires coaxiales de même diamètre à extrémités opposées ouvertes et séparées l'une de l'autre par une cloison interne transversale, tandis que le premier piston, présentant la forme générale d'une bague et délimitant les deux chambres annulaires, est monté sur l'une des parties tubulaires coaxialement à celle-ci à proximité de la cloison transversale et l'autre partie tubulaire constitue le deuxième piston, la troisième chambre étant radialement contiguë à l'une des deux chambres annulaires.

Le cylindre du vérin comprend trois orifices d'alimentation en fluide respectivement des trois chambres indépendantes, deux des orifices d'alimentation débouchant directement respectivement dans l'une des chambres annulaires et la troisième chambre cylindrique.

Le premier piston est monté coulissant dans une chemise cylindrique fixée dans le cylindre du vérin en délimitant avec ce dernier un espace annulaire dans lequel débouche le troisième orifice d'alimentation et qui communique avec la chambre annulaire opposée à celle voisine de la troisième chambre cylindrique.

La chemise cylindrique peut être fixée dans le cylindre du vérin par un élément formant écrou vissé dans le cylindre pour bloquer la chemise, par l'intermédiaire d'une pièce formant palier pour la partie tubulaire portant le premier piston, en butée contre un épaulement interne du cylindre et la partie formant palier comporte au moins une rainure mettant en communication la chambre annulaire et l'espace annulaire précités.

Le dispositif comprend de plus une tige d'actionnement de la pièce cylindrique coulissante, montée coaxialement dans la partie tubulaire portant le premier piston et ayant l'une de ses extrémités logée dans un palier d'appui comprenant un grain et une partie tronconique centrée sur la partie tubulaire et facilitant l'introduction de la tige lors de sa mise en place.

L'extrémité opposée de la tige d'actionnement est maintenue en appui sur un grain par une pièce de maintien raccordée au cylindre par l'intermédiaire d'un soufflet de protection.

Le dispositif comprend avantageusement un premier joint d'étanchéité disposé entre le premier piston et la chemise cylindrique, un second joint d'étanchéité disposé entre le cylindre du vérin et la partie tubulaire constituant le deuxième piston pour assurer l'étanchéité entre la troisième chambre cylindrique et la chambre annulaire contiguë et au moins un troisième joint d'étanchéité disposé entre la pièce formant palier et l'autre partie tubulaire de la pièce cylindrique.

Lorsque le dispositif formant vérin est utilisé dans une suspension hydropneumatique, les deux chambres annulaires sont des chambres servant à l'anti-dévers et la troisième chambre cylindrique est une chambre servant à l'anti-pompage.

L'extrémité supérieure du cylindre délimitant la troisième chambre cylindrique communique avec un accumulateur hydropneumatique par l'intermédiaire d'un amortisseur.

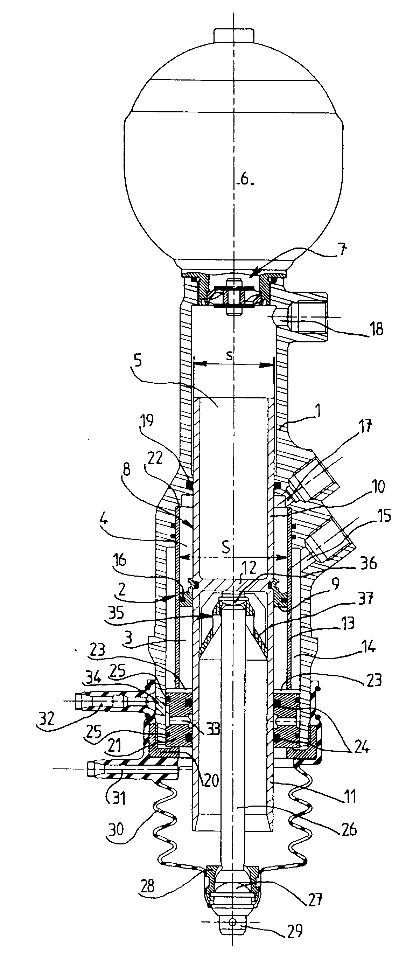

L'invention sera mieux comprise et d'autres buts, détails et avantages de celle-ci apparaîtront plus clairement au cours de la description explicative qui va suivre faite en référence au dessin schématique annexé donné uniquement à titre d'exemple illustrant un mode de réalisation de l'invention et dans lequel la figure unique est une vue en coupe d'un dispositif formant vérin hydraulique conforme à l'invention.

Le dispositif formant vérin hydraulique de l'invention va être décrit dans son application à une suspension hydropneumatique pour véhicule automobile, mais il est bien entendu que ce dispositif peut avoir d'autres utilisations, par exemple dans une transmission hydraulique quelconque.

En se référant à la figure unique, le dispositif formant vérin hydraulique comprend un cylindre 1 dans lequel est montée à coulissement une structure à pistons 2 agencée pour définir dans le cylindre 1 trois chambres indépendantes 3, 4 et 5.

Dans l'application considérée, les deux chambres 3, 4 servent à l'anti-dévers du véhicule tandis que la chambre 5 sert à l'anti-pompage de celui-ci.

La structure à pistons 2 est reliée à un bras de support de roue (non représenté) de la manière qui sera expliquée ultérieurement et le cylindre 1 est relié à la caisse du véhicule.

L'extrémité supérieure du cylindre 1 communique avec un accumulateur hydropneumatique du type à membrane 6 par l'intermédiaire d'un amortisseur 7 comme cela est bien connu.

Selon l'invention, les deux chambres 3, 4 sont annulaires et entourent une pièce cylindrique 8 montée à coulissement dans le cylindre 1.

La pièce cylindrique 8 porte d'une part un premier piston 9 délimitant les deux chambres annulaires 3, 4 et d'autre part un deuxième piston 10 délimitant la troisième chambre 5 de forme sensiblement cylindrique et contiguë à la chambre annulaire 4.

Plus précisement, la pièce cylindrique coulissante 8 comprend deux parties tubulaires respectivement 10 constituant le deuxième piston et 11, séparées l'une de l'autre par une cloison interne transversale 12. Les deux parties tubulaires 10, 11 sont coaxiales, de même diamètre et ont leurs extrémités opposées qui sont ouvertes, permettant ainsi notamment à la partie tubulaire 10 de définir avec le cylindre 1 la chambre sensiblement cylindrique 5.

Le premier piston 9, qui présente la forme générale d'une bague, est monté sur la partie tubulaire 11 coaxialement à celle-ci et à proximité de la cloison transversale 12. Le piston 9 est de plus monté coulissant dans une chemise cylindrique 13 fixée dans le cylindre 1 en délimitant avec ce dernier un espace annulaire 14 dans lequel débouche un orifice 15 d'alimentation en fluide réalisé dans le cylindre 1. Pour assurer l'étanchéité entre les deux chambres annulaires 3, 4, un joint d'étanchéité dynamique 16 (joint coulissant + joint torique) est monté sur le piston 9 en contact avec la chemise cylindrique 13.

Les deux chambres 4, 5 sont alimentées en fluide directement respectivement par deux orifices d'alimentation 17, 18 réalisés dans le cylindre 1.

Un joint d'étanchéité dynamique 19 est également disposé entre le cylindre 1 et la partie tubulaire 10 constituant le deuxième piston pour assurer l'étanchéité entre la chambre annulaire 4 et la chambre cylindrique 5.

La chemise cylindrique 13 est fixée dans le cylindre 1 par un élément formant écrou 20 vissé dans le cylindre 1 pour bloquer en translation une pièce cylindrique 21 en appui contre une extrémité de la chemise cylindrique 13, dont l'extrémité opposée est en butée contre un épaulement interne 22 du cylindre 1. La pièce cylindrique 21 sert de palier de glissement à la partie tubulaire 11 de la pièce cylindrique coulissante 8. La pièce 21 comporte au moins une et de préférence plusieurs rainures transversales 23 permettant d'établir une communication entre l'espace annulaire 14 et la chambre annulaire 3. La pièce 21 comprend de plus deux joints internes 24 assurant l'étanchéité avec la partie tubulaire 11 et deux joints externes 25 assurant l'étanchéité avec le cylindre 1.

Le blocage de la chemise 13 dans le cylindre 1 peut également être réalisé par sertissage de l'extrémité correspondante du cylindre 1 sur la pièce formant palier 21, au lieu d'utiliser l'élément formant écrou 20.

La pièce cylindrique coulissante 8 est actionnée par une tige 26 montée dans la partie tubulaire 11 coaxialement à celle-ci et ayant son extrémité inférieure maintenue sur un grain 27 par une pièce de maintien 28 enserrant ensemble l'extrémité de la tige 26 et le grain 27. Ce dernier se termine par un axe 29 fixé au bras de support de roue. La pièce de maintien 28 est raccordée au cylindre 1 par l'intermédiaire d'un soufflet de protection en caoutchouc 30 emmanché sur la partie inférieure du cylindre 1. Le soufflet 30 assure la protection de la pièce coulissante 8 contre toute agression corrosive extérieure et comprend, venant de moulage, un conduit 31 de mise à l'air du soufflet 30 et un conduit 32 de récupération des suintements internes de la pièce coulissante 8 passant à travers des perçages 33, 34 respectivement de la pièce formant palier 21 et du cylindre 1.

L'extrémité supérieure de la tige 26 est logée dans un palier d'appui 35 comprenant un grain 36 et une partie tronconique 37 centrée sur la partie tubulaire 11 et facilitant la mise en place de la tige 26 par simple introduction de celle-ci jusqu'en appui sur le grain 36. Ce dernier peut être solidaire soit de la cloison 12, soit de la partie tronconique 37.

Le dispositif formant vérin hydraulique ci-dessus décrit a ses trois chambres indépendantes conçues pour générer un effort F avec un minimum de frottement et une bonne étanchéité entre chacune des chambres 3, 4, 5 et satisfaisant la relation : F = (P1-P2)(S-s) + P3s, où P1, P2, P3 sont les pressions de fluide régnant dans les chambres 3, 4, 5, S est la section de la chemise cylindrique 13 et s est la section de la partie tubulaire 10 constituant le deuxième piston.

De plus, la conception des chambres est telle que le dispositif formant vérin hydraulique présente une forme compacte.

Le dispositif de l'invention n'est pas limité à la fonction anti-dévers hydraulique selon laquelle les chambres des vérins d'un même essieu sont croisées, et s'applique également à la fonction anti-tangage du véhicule selon laquelle les deux vérins situés d'un même côté de deux essieux différents ont leurs chambres croisées.

## Revendications

1. Dispositif formant vérin hydraulique pouvant être utilisé par exemple dans une suspension hydropneumatique pour véhicule automobile, comprenant un cylindre (1) dans lequel est montée à coulissement une structure à pistons agencée pour définir dans le cylindre (1) trois chambres indépendantes, deux (3, 4) des trois chambres (3, 4, 5) étant annulaires et entourant une pièce cylindrique coulissante (8) portant d'une part un premier piston (9) et d'autre part un deuxième piston (10) délimitant la troisième chambre sensiblement cylindrique (5), caractérisé en ce que la pièce cylindrique (8) comprend deux parties tubulaires coaxiales de même diamètre (10, 11), à extrémités opposées ouvertes et séparées l'une de l'autre par une cloison interne transversale (12), le premier piston (9), présentant la forme générale d'une bague et délimitant les deux chambres annulaires (3, 4), est monté sur l'une des parties tubulaires (11) coaxialement à celle-ci à proximité de la cloison transversale (12), en ce que l'autre (10) des deux parties tubulaires (10, 11) constitue le deuxième piston précité, et en ce que la troisième chambre (5) est radialement contigüe à l'une (4) des deux chambres annulaires (3, 4).

2. Dispositif selon la revendication 1, caractérisé en ce que le cylindre (1) du vérin comprend trois orifices d'alimentation en fluide (15, 17, 18) respectivement des trois chambres indépendantes (3, 4, 5), deux (17, 18) des orifices d'alimentation débouchant directement respectivement dans l'une (4) des chambres annulaires (3, 4) et la troisième chambre cylindrique (5).

3. Dispositif selon la revendication 1 ou 2, caractérisé en ce que le premier piston (9) est monté coulissant dans une chemise cylindrique (13) fixée dans le cylindre (1) du vérin en délimitant avec ce dernier un espace annulaire (14) dans lequel débouche le troisième orifice d'alimentation (15) et qui communique avec la chambre annulaire (3) opposée à celle (4) voisine de la troisième chambre cylindrique (5).

4. Dispositif selon la revendication 3, caractérisé en ce que la chemise cylindrique (13) est fixée dans le cylindre (1) du vérin par un élément formant écrou (20) vissé dans le cylindre (2) pour bloquer, par l'intermédiaire d'une pièce formant palier (21) pour la partie tubulaire (11), la chemise (13) en butée contre un épaulement interne (22) du cylindre (1) et en ce que la pièce formant palier (21) comporte au moins une rainure (23) mettant en communication la chambre annulaire (3) et l'espace annulaire (14).

5. Dispositif selon l'une des revendications précédentes, caractérisé en ce qu'il comprend une tige (26) d'actionnement de la pièce cylindrique coulissante (8), montée coaxialement dans la partie tubulaire (11) portant le premier piston et ayant l'une de ses extrémités logée dans un palier d'appui (35) comprenant un grain (36) et une partie tronconique (37) centrée sur la partie tubulaire (11) et facilitant l'introduction de la tige (26) lors de sa mise en place.

6. Dispositif selon la revendication 5, caractérisé en ce que l'extrémité opposée de la tige d'actionnement (26) est maintenue en appui sur un grain (27) par une pièce de maintien (28) raccordée au cylindre (1) par l'intermédiaire d'un soufflet de protection (30).

7. Dispositif selon l'une des revendications précédentes, caractérisé en ce qu'il comprend un premier joint d'étanchéité (16) disposé entre le premier piston (9) et la chemise cylindrique (13), un second joint d'étanchéité (19) disposé entre le cylindre (1) et la partie tubulaire (10) constituant le deuxième piston pour assurer l'étanchéité entre la troisième chambre cylindrique (5) et la chambre annulaire contigüe (4) et au moins un troisième joint d'étanchéité (24) disposé entre la pièce formant palier (21) et l'autre partie tubulaire (11) de la pièce cylindrique (8).

8. Dispositif selon l'une des revendications précédentes, utilisé dans une suspension hydropneumatique, caractérisé en ce que les deux chambres annulaires (3, 4) sont des chambres servant à l'anti-dévers et la troisième chambre (5) est une chambre servant à l'anti-pompage.

9. Dispositif selon la revendication 8, caractérisé en ce que l'extrémité supérieure du cylindre (1) délimitant la troisième chambre cylindrique (5) communique avec un accumulateur hydropneumatique (6) par l'intermédiaire d'un amortisseur (7).

## Patentansprüche

1. Hydraulisches Stellglied, zum Beispiel zum Gebrauch in einer hydropneumatischen Aufhängung für ein Kraftfahrzeug, umfassend einen Zylinder (1), in dem verschiebbar eine Kolbenstruktur angebracht ist, die angeordnet ist, um in dem Zylinder (1) drei unabhängige Kammern zu definieren, wobei zwei (3, 4) der drei Kammern (3, 4, 5) ringförmig sind und ein zylindrisches verschiebbares (8) Stück umfassen, das einerseits einen ersten Zylinder (9) trägt und andererseits einen zweiten Zylinder (10), der die dritte, deutlich zylindrische (5) Kammer eingrenzt, dadurch gekennzeichnet, daß das zylindrische (8) Stück zwei röhrenförmige koaxiale Stücke mit dem gleichen Durchmesser (10, 11) mit gegenüberliegenden, offenen und voneinander durch eine quer verlaufende innere Trennwand (12) getrennten äußeren Enden umfaßt, wobei der erste Kolben (9) die allgemeine Form eines Ringes aufweist und die zwei ringförmigen Kammern (3, 4) begrenzt und auf einem der röhrenförmigen (11) Stücke koaxial zu diesen in der Nähe der quer verlaufenden (12) Trennwand angebracht ist, daß das andere (10) der zwei röhrenförmigen (10, 11) Stücke den zweiten besagten Kolben bildet und daß die dritte Kammer (5) radikal an einer (4) der zwei ringförmigen (3, 4) Kammern anliegend ist.

2. Vorrichtung gemäß Anspruch 1, dadurch gekennzeichnet, daß der Zylinder (1) des Stellgliedes drei Öffnungen zur Versorgung mit Flüssigkeit (15, 16, 17) jeweils der drei unabhängigen Kammern (3, 4, 5) umfaßt, wobei zwei (17, 18) der Versorgungsöffnungen direkt jeweils in eine (4) der ringförmigen (3, 4) Kammern und die dritte zylindrische (5) Kammer münden.

3. Vorrichtung gemäß Anspruch 1 oder 2, dadurch gekennzeichnet, daß der erste Kolben (9) verschiebbar in einer zylindrischen (13) Einlage angebracht ist, die in dem Zylinder (1) des Stellgliedes befestigt ist und dabei mit diesem letzteren einen ringförmigen (14) Raum begrenzt, in den die dritte Versorgungsöffnung (15) einmündet und die mit der ringförmigen (3) Kammer in Verbindung steht, die der (4) neben der dritten zylindrischen (5) Kammer gegenüber liegt.

4. Vorrichtung gemäß Anspruch 3, dadurch gekennzeichnet, daß die zylindrische (13) Einlage in dem Zylinder (1) des Stellgliedes durch ein eine Mutter (20) bildendes Element befestigt ist, die in den Zylinder (2) geschraubt ist, um mittels eines für das röhrenförmige (11) Stück ein Lager (21) bildendes Stück die Einlage (13) im Anschlag gegen einen inneren Ansatz (22) des Zylinders (1) zu blockieren und daß das ein Lager (21) bildende Stück wenigstens eine Rinne (23) umfaßt, die die ringförmige (3) Kammer und den ringförmigen (14) Raum miteinander verbindet.

5. Vorrichtung gemäß einem der vorherigen Ansprüche, dadurch gekennzeichnet, daß sie einen Stift (26) zur Betätigung des verschiebbaren (8) zylindrischen Stücks umfaßt, das koaxial in dem röhrenförmigen (11) Stück angebracht ist, das den ersten Kolben trägt und dessen eines äußeres Ende in einem anliegenden Lager (35) untergebracht ist, das ein Kügelchen (36) und ein kegelstumpfartiges (37) Stück umfaßt, das auf dem röhrenförmigen (11) Stück zentriert ist und die Einführung des Stiftes (26) bei seiner Anbringung erleichtert.

6. Vorrichtung gemäß Anspruch 5, dadurch gekennzeichnet, daß das dem Betätigungsstift (26) gegenüberliegende äußere Ende auf einem Kügelchen (27) durch ein Stützstück (28) anliegend gehalten wird, das mit dem Zylinder (1) mittels einer Schutzdichtung (30) verbunden ist.

7. Vorrichtung gemäß einem der vorherigen Ansprüche, dadurch gekennzeichnet, daß sie einen ersten Dichtungsring (16) umfaßt, der zwischen dem ersten Kolben (9) und der zylindrischen Einlage (13) einen zweiten Dichtungsring (19), der zwischen dem Zylinder (1) und dem röhrenförmigen (10) Stück, das den zweiten Kolben bildet, um die Dichtigkeit zwischen der dritten zylindrischen Kammer (5) und der ringförmigen anliegenden (4) Kammer zu gewährleisten, angeordnet ist und wenigstens einen dritten Dichtungsring (24), der zwischen dem ein Lager (21) bildenden Stück und dem anderen röhrenförmigen (11) Stück des zylindrischen (8) Stücks angeordnet ist.

8. Vorrichtung gemäß einem der vorherigen Ansprüche, die in einer hydropneumatischen Aufhängung verwendet wird, dadurch gekennzeichnet, daß die zwei ringförmigen Kammern (3, 4) Kammern sind, die zur Verhinderung von Achsstürzen dienen und die dritte Kammer (5) eine Kammer ist, die zur Verhinderung von Hin- und Herpendeln dient.

9. Vorrichtung gemäß Anspruch 8, dadurch gekennzeichnet, daß das obere äußere Ende des Zylinders (1), das die dritte zylindrische (5) Kammer begrenzt, mittels eines Stoßdämpfers (7) mit einem hydropneumatischen Akkumulator (6) in Verbindung steht.

## Claims

1. Hydraulic actuator device suitable for use for example in a hydropneumatic suspension for a motor vehicle, comprising a cylinder (1) in which is slidably mounted a piston structure arranged for defining within the cylinder (1) three independent chambers, two (3,4) of the three chambers (3,4,5) being annular and surrounding a sliding cylindrical piece (8) carrying, on the one hand, a first piston (9) and, on the other hand, a second piston (10) delimiting the substantially cylindrical third chamber (5), characterized in that the cylindrical piece (8) comprises two coaxial tubular parts of a same diameter (10, 11), having opposed ends that are open and separated the one from the other by means of a transversal inner partition wall (12), the first piston, having the general shape of a ring and delimiting the two annular chambers (3, 4), is mounted on one of the tubular parts (11) coaxialy thereto near the transversal partition wall (12), in that the other (10) of the two tubular parts (10, 11) forms said second piston, and in that the third chamber (5) is radially adjacent to one (4) of the two annular chambers (3, 4).

2. Device according to claim 1, characterized in that the cylinder (1) of the actuator comprises three feeding apertures (15, 17, 18) for feeding with fluid respectively the three independant chambers (3, 4, 5), two (17, 18) of the feeding apertures emerging directly into one (4) of the annular chambers (3, 4) and into the third cylindrical chamber (5),respectively.

3. Device according to claim 1 or 2, characterized in that the first piston (9) is slidably mounted in a cylindrical jacket (13) fixed in the cylinder (1) of the actuator by delimiting therewith an annular space (14) in which emerges the third feeding aperture (15) and which communicates with the annular chamber (3) opposed to that (4) near the third cylindrical chamber (5).

4. Device according to claim 3 , characterized in that the cylindrical jacket (13) is fixed in the actuator cylinder (1) by means of a nut forming element (20) that is screwed in the cylinder (2) for blocking, by means of a piece (21) that forms a bearing element for the tubular part (11), the jacket (13) in abutment on an inner shoulder (22) of the cylinder (1) and in that the piece (21) that forms a bearing element comprises at least one groove (23) providing a communication between the annular chamber (3) and the annular space (14).

5. Device according to one of the preceding claims, characterized in that it comprises a rod (26) for activating the sliding cylindrical piece (8), coaxially mounted in the tubular part (11) that carries the first piston and has one of its ends housed in a support bearing element (35) comprising a bush (36) and a tapered part (37) centered on the tubular part (11) and facilitating introduction of the rod (26) upon its positioning.

6. Device according to claim 5 , characterized in that the opposed end of the activating rod (26) is supported on a bush (27) by means of a holding piece (28) connected to the cylinder (1) through protective bellows (30).

7. Device according to one of the preceding claims, characterized in that it comprises a first sealing gasket (16) arranged between the first piston (9) and the cylindrical jacket (13), a second sealing gasket (19) arranged between the cylinder (1) and the tubular part (10) forming the second piston for providing tightness between the third cylindrical chamber (5) and the adjacent annular chamber (4) and at least one third sealing gasket (24) arranged between the piece (21) that forms a bearing element and the other tubular part (11) of the cylindrical piece (8).

8. Device according to one of the preceding claims, for use in a hydropneumatic suspension, characterized in that the two annular chambers (3, 4) are chambers used as an anti-sloping arrangement and the third chamber (5) is a chamber used as an anti-hunting arrangement.

9. Device according to claim 8, characterized in that the upper end of the cylinder (1) that delimits the third cylindrical chamber (5) communicates with a hydropneumatic accumulator (6) through an absorber (7).
